# EUROPÄISCHE PATENTANMELDUNG

(11) **EP 1 510 931 A1**
(43) Veröffentlichungstag der Anmeldung: **02.03.2005**
(21) Anmeldenummer: 03019436.9
(22) Anmeldetag: 28.08.2003
(51) Int. Cl.: G06F 17/21

(54) **Verfahren zur plattformübergreifenden Archivierung und Indizierung digitaler Media assets**

(71) Anmelder: DVZ-Systemhaus GmbH, 06120 Halle (DE)
(72) Erfinder: Hannemann, Werner, Dr., 06120 Lieskau (DE)
(74) Vertreter: Voigt, Wolf-Rüdiger

(57) **Zusammenfassung**

Die Erfindung betrifft ein Verfahren zur plattformübergreifenden Archivierung und Indizierung digitaler Media assets (1) (Bilder, Videos) in bekannten Speichermedien der Computertechnik. Das Verfahren gestattet es, dass eine effektive medienübergreifende Verfügbarkeit von z. B. Bildern über das Web, einem Desktop, von Pocket PC's, Handy's und weiterer Hardwarekomponenten, d.h. Ausgabemöglichkeiten erreicht wird, wenn der Header (2) von modernen digitalen und webtauglichen Bildformaten dazu genutzt wird, weitere zusätzliche, bildbegleitende Informationen mit dem Ziel einer eindeutigen Identifizierung aufzunehmen, wobei sich dieses in erforderlicher Weise heute mit den bekannten Standards von EXIF und von IPTC durchführen lässt.

Über frei definierbare tags im Header (2) digitalisierter Media assets (1) werden zusätzliche Informationen zu Inhalt und Registrierung [ Erfassung einer lizenzierten Anzahl registrierbarer Media assets (1) ] eingebracht, wobei mittels eines international gültigen Schlüssels jedes Media asset (1) einen eindeutigen Mediacode (5) zugeordnet bekommt, der das plattformübergreifende Archivieren und Indizieren zum Zweck des schnellen Auffindens digitaler Bildformate erlaubt.

## Beschreibung

Die Erfindung betrifft ein Verfahren zur plattformübergreifenden Archivierung und Indizierung digitaler Media assets (Bilder, Videos) in bekannten Speichermedien der Computertechnik. Das Verfahren gestattet es, dass eine effektive medienübergreifende Verfügbarkeit von z. B. Bildern über das Web, einem Desktop, von Pocket PC's, Handy's und weiterer Hardwarekomponenten bzw. Ausgabemöglichkeiten erreicht wird, wenn der Headerbereich von modernen digitalen und webtauglichen Bildformaten dazu genutzt wird, weitere zusätzliche, bildbegleitende Informationen mit dem Ziel einer eindeutigen Identifizierung aufzunehmen, wobei sich dieses in erforderlicher Weise heute mit den bekannten Standards von EXIF und von IPTC durchführen lässt.

Das Speichern großer Datenmengen in Form von Textdateien der unterschiedlichsten Art und die Arbeit mit ihnen bereitet in der Regel keine Schwierigkeiten, wenn moderne Hardwarekomponenten mit den entsprechenden Betriebssystemen verwendet werden. Zunehmend ist es jedoch auch notwendig, speicherplatzintensive Bilddateien, die digitalisiert eingelesen werden, zum einen in hoher Qualität (Bildauflösung) mittels hochwertiger Digitalkameras zu erfassen und zum anderen so zu kennzeichnen, dass nach deren Abspeicherung in der bekannten Weise, ein zu einem späteren Zeitpunkt erfolgender Zugriff zielgerichtet erfolgen kann, wobei die Angabe auf Frontends der eingangs erwähnten Art möglich sein muss.
Die Verfügbarkeit der digitalisierten, bildlichen Informationen (Media assets) ist jedoch z. Zt. in den heterogenen Umgebungen, wie Desktop-PC (Win/Mac), Internet-Browser, Pokket-PC, Handy usw., d. h. plattformübergreifend nicht gegeben, da es an einem einheitlichen Schlüssel zur exakten Definition bisher mangelt.
Über die Nutzung relativ teurer Internet-Suchmaschinen können daher die ggf. bekannten und abgespeicherten Bilddateien (Media assets) ermittelt werden, was sich als sehr zufällig und uneffektiv darstellt.
Es besteht jedoch die Möglichkeit, da die meisten digitalen und fast alle webtauglichen Bildformate (JPEG, TIFF, MPEG, DICOM) über einen sogenannten Headerbereich verfügen, hier Abhilfe zu schaffen, indem in diesem Bereich entsprechende Modifizierungen vorgenommen werden.

Damit besteht für die Erfindung die Aufgabe darin, eine Lösung anzubieten. mit deren Hilfe die digitalisierten Media assets auch in heterogenen Umgebungen schneller erschlossen werden können und in diesem Sinn über alle denkbaren Frontends zur Ausgabe gelangen, wobei durch Modifizierung des Headerbereiches in digitalisierten Bildformaten und unter Nutzung der damit in Verbindung stehenden internationalen Standards von EXIF und von IPTC eine automatische, zielgerichtete Ortung entsprechend archivierter und indizierter Media assets ohne größeren Rechercheaufwand möglich wird.

Erfindungsgemäß wird die Aufgabe mit den Merkmalen des kennzeichnenden Teils des 1. Patentanspruchs gelöst.
Die weitere vorteilhafte Ausgestaltung der Erfindung erfolgt in den Unteransprüchen 2 und 3.

Folgende ergänzende Hinweise zur erfinderischen Lehre sind erforderlich.

Die zur Kennzeichnung von digitalen Bildformaten nutzbaren internationalen Standards , wie EXIF und IPTC speichern Informationen zum Bildformat bzgl. eines Zeitpunktes einer Aufnahme einerseits und zu inhaltlichen sowie rechtlichen Informationen andererseits. Es ist bekannt, dass auch beide Standards kombiniert verwendet werden können, wobei in sogenannten tags Informationen zu Bild, Bildbeschreibung, Fotograf, Besitzer, Lizenz, Schlagworten etc. abgelegt werden. Einige "nicht belegte" tags - auch als "Customized tags" zu bezeichnen - bieten hier die Möglichkeit einer frei vornehmbaren "Neudefmition", sodass hier eines oder mehrere Felder zur eindeutigen Kennzeichnung eines jeden Media assets zum Zwecke der Archivierung mittels eines speziell hierfür geschaffenen Mediacodes genutzt werden und weitere "freie" Felder zur Aufnahme von Referenzen bzgl. programmspezifischer Indizierungen dienen. Der zur Durchführung des Verfahrens zu verwendende Mediacode ist dabei digital in jedem Bild gespeichert, sodass damit jedes Media asset aus Web-Datenbanken oder anderen Plattformen ermittelbar ist.
Über die in einem IPTC-Header vorgehaltenen inhaltlichen Informationen sowie die speziellen o. a. Felder ist zugleich eine einheitliche Indizierung vorhanden. Somit braucht ein Media asset nur einmal indiziert werden und es ist diese Indizierung automatisch konsistent über alle Medien verfügbar. Bilder können z. B. auf einem Desktop mit Überschriften, Beschreibungen, Schlagworten, Georeferenzierungen versehen werden und bleiben dann auch für eine Übertragung ins Web oder auf einen Pocket-PC erhalten.

Mediacode und inhaltliche Informationen verbleiben dabei immer im IPTC-Header. Sie werden lediglich je nach Zweckmäßigkeit in eine Datenbank ausgelesen, um einen schnelleren Zugriff zu ermöglichen. Auch eine Editierung inhaltlicher Informationen ist jederzeit z. B. über einen Browser möglich, wird aber dann auch in dem Header abgespeichert.

Im Folgenden soll auf den grundsätzlichen Aufbau des Mediacodes eingegangen werden.

Der für ein Media asset (Bild, Video) verwendete Mediacode bedient sich eines einheitlichen (eindeutigen) Schlüssels, der für jede Softwareinstallation einen Zugang zu den dort systematisch abgelegten Media assets gestattet.
Der genannte Schlüssel enthält dabei typische softwarerelevante Bereiche und einen lizenzierten Bereich zur Ablage einer definierten Menge der Media assets. Die lizenzierten Bereiche sind über diesen kombiniert gestalteten Schlüssel im Header jederzeit eindeutig entschlüsselbar - übergreifend über alle Plattformen der hardwareseitigen Präsentation.
Nach Aktivierung einer lizenzierten Anzahl derartig indizierter Media assets kann somit jederzeit auf das jeweilige individuell gekennzeichnete Media Asset zurückgegriffen werden.

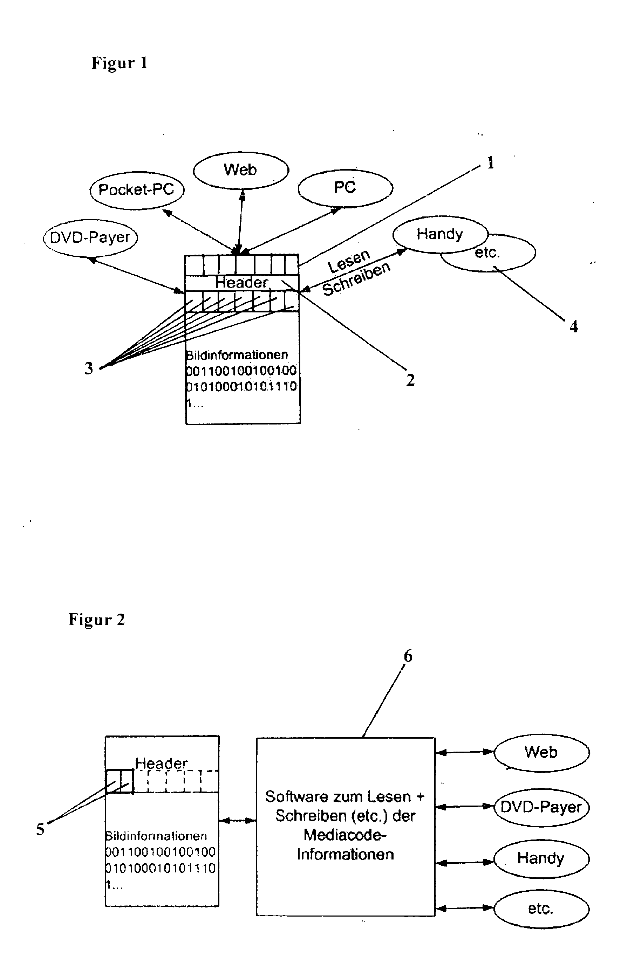

Nachfolgend soll zusammengefasst auf ein zweckmäßiges Ausführungsbeispiel und auf Anwendungsfälle hingewiesen werden.
Dabei soll auf prinzipielle Darstellungen des Verfahrens, gemäß Figur 1 und 2 zurückgegriffen werden.

Es zeigen:
- Figur 1:: Ein erfindungsgemäß strukturiertes Media asset in Relation zur hardwareseitigen Präsentationsmöglichkeit
- Figur 2:: Die Herstellung der Kompatibilität zwischen einem Media asset und und Hardwarekomponenten, die zur Auswahl der Präsentation stehen können

Die im einzelnen verwendeten Bezugszeichen lauten:
1 - Media asset
2 - Header (Adressbereich)
3 - Customized tag (für beschreibbare Teile des Adressbereiches)
4 - Hardwarekomponente
5 - Mediacode
6 - Mediacode-Software

Ein Media asset 1 besitzt neben den in ihm überwiegend gespeicherten inhaltlichen Informationen einen Header 2, der mit bildbegleitenden Informationen - abgelegt in den sog.tags- versehen ist. Bei Verwendung des IPTC-Standards beinhalten diese tags Angaben z. B. zum Titel, zur Bildbeschreibung, zum Fotografen, Besitzer des Bildes, zu Lizenzvermerken etc. Ohne besondere Gründe - aus technischer Sicht - sind jedoch noch weitere frei definierbare tags - die Customized tags - vorgehalten, wobei mit deren erfindungsgemäßen Nutzung im Sinne einer Neudefinition mittels der Einbindung des Mediacodes 5, die eindeutige Kennzeichnung des Media assets 1 plattformübergreifend erfolgt. Die auf diese Weise durchgeführte eindeutige Kennzeichnung lässt die sichere und schnelle Archivierung umfangreichen Bildmaterials zu, wobei weitere Customized tags 3 mit programmspezifischen Indizierungen es gestatten, dass mittels des Moduls einer zwischen Media asset 1 und Hardwarekomponente 4 vermittelnden Mediacode-Software 6 die Kompatibilität zu den die Ausgabe anfordernden Frontends jederzeit herstellbar ist.
Der Modul der Mediacode-Software 6 ist programmtechnisch mit folgenden Funktionen unterlegt:
- nur Auslesen und Darstellen der Mediacode-Informationen
- zusätzliches Suchen und Finden über die Mediacode-Informationen
- zusätzliches Editieren von Mediacode-Informationen
- Herstellen von plattformübergreifenden Bezügen per Mediacode 5

Die Mediacode-Informationen verbleiben immer im Header des jeweiligen Media assets 1. Sie werden lediglich je nach Zweckmäßigkeit zusätzlich in eine Datenbank ausgelesen. Damit soll z. B. eine schnellere Suche bei großen Datenmengen ermöglicht werden.

Der Mediacode 5 genügt den verfahrensgemäß erforderlichen Bedingungen indem er innerhalb seines Strings (seiner Zeichenfolge), bestehend aus ASCII-Zeichen (Zeichensätzen), in mehrere Blöcke eingeteilt ist. Beispielhaft kann ein Mediacode 5 vorgeschlagen werden, der aus 6 Blöcken zusammengesetzt ist. Sie können wie folgt definiert werden:
- Block 1 dient zur Kennzeichnung der Applikation, die den Mediacode 5 ergeben hat. Jede SW-Installation wird vom Hersteller mit einem eindeutigen Schlüssel versehen. Bei der Lizenzierung wird dieser Schlüssel aktiviert und dem Gesamtsystem bekannt gemacht.
   Länge: 6 Stellen
- Block 2 dient zur Kennzeichnung des einzelnen Media assets 1
   Länge: 12 Stellen
- Block 3 dient zur Kennzeichnung einer History des Media assets 1
   Länge: 3 Stellen
- Block 4 dient zur Kennzeichnung der programmspezifischen Indizierung
   Länge: 6 Stellen
- Block 5 enthält Lizenzinformationen
   Länge: 4 Stellen
- Block 6 gibt eine Prüfsumme an
   Länge: 4 Stellen

Jedes einzelne Media assets 1 wird nun mit diesem dann weltweit verwendbaren und eindeutigen Mediacode 5 abgespeichert. Dabei sind die Blöcke 1 und 2 - einmal einem Bild vergeben nicht mehr änderbar. Über die Blöcke 1 und 2 des Mediacodes 5 wird das Management der Media Assets unter den Software-Installationen automatisiert abgewickelt. Die weiteren Mediacode-Informationen werden - soweit möglich und sinnvoll - in IPTC-konformen tags abgespeichert.

Folgende konkrete und zweckmäßige Anwendungsfälle zur erfindungsgemäßen Archivierung und Indizierung von Media Assets 1 sind denkbar:
- Ein Teil von auf einem lokalen PC z. B. mit Hilfe von CDs verwalteten Media assets 1 soll im Internet oder einem Intranet veröffentlicht werden. Der Autor muss nun lediglich einen Upload in die Bilddatenbank im Web anstoßen und automatisiert werden per Mediacode 5 bildbegleitenden Informationen verarbeitet. Zugleich wäre über den Mediacode 5 eine Autorisierung sowie eine Abarbeitung spezifischer für diese Media assets 1 geltender Regeln möglich.
- Eine Institution (Behörde, Versicherung, Baubranche etc.) erfasst mit einer Digitalkamera ein Media asset 1 von einem Objekt oder Ereignis (Unfallschaden, Stand von Bauarbeiten, Zustand von Bäumen etc. pp.). Textbasierende Informationen werden erfasst. Mit Hilfe der Mediacode-Technologie können nun bild- und textbasierende Informationen auf jeder beliebigen Plattform (z. B. direkt Vorort per Pocket-PC) zuverlässig zusammengeführt werden. Einmal zusammengeführt braucht lediglich das Media asset 1 an beliebige Adressaten (z. B. eine Webdatenbank in einem Intranet} gesandt werden und alle Informationen stehen zur Verfügung.
- Verwalten von Media assets 1 zu Objekten oder Ereignissen. Behörden führen z. B. Kataster zu Bäumen. Regelmäßig wird der Zustand der Bäume erfasst und dieser auch per Media asset 1 dokumentiert. Mit Hilfe des Mediacode 5 kann nun auf effektive Art eine robuste Verbindung zwischen dem Media asset 1 und hier den Baum beschreibenden Informationen hergestellt werden. Aus den Datensätzen können nun eindeutig und unabhängig vom "Lagerort" der einzelnen Media assets 1 die zu dem Datensatz zugehörigen Media assets 1 aufgerufen werden. Ebenfalls ist so ein eindeutiger Bezug umgekehrt - vom Media Asset 1 zum Datensatz - möglich.
- Geografische Informationssysteme (GIS) Im Mediacode 5 können auch geografische Koordinaten jeder Art abgespeichert werden. Somit ist es auf einfache, robuste und nlattformübergreifende Art möglich, direkt von einem Media asset 1 auf einen Standort zu verweisen und umgekehrt von einem Standort die zugehörigen Media assets 1 abzurufen.

## Patentansprüche

1. Verfahren zur plattformübergreifenden Archivierung und Indizierung digitaler Media assets (1) in bekannten Speichermedien der Computertechnik, **gekennzeichnet dadurch, dass** im Header (2) eines Media assets (1) frei definierbare- sogenannte Customized tags (3) - mit einem Mediacode (5) belegt werden, wobei letzterer in einer in Blockform untergliederten Zeichenfolge (String) Informationen zur Indizierung und Archivierung des jeweiligen Media assets (1) in unveränderter Form und weitere Informationen zu Inhalt, Herkunft, Speicherkapazität u. a. in variabler Form enthält und der Modul einer Media-Software (6) eine plattformübergreifende Kompatibilität bzgl. der nutzbaren Hardwarekomponenten (4) herstellt.

2. Verfahren zur plattformübergreifenden Archivierung und Indizierung nach Anspruch 1, **gekennzeichnet dadurch, dass** der Mediacode (5) in seinem String mindestens 2 Blöcke enthält, die einmal dazu erforderlich sind, eine eindeutige Kennzeichnung vorzunehmen welche Applikationen den Mediacode (5) vergeben hat und zum anderen das einzelne Media asset (1) zu indizieren, wobei dann über die Blöcke des Mediacodes (5) das Management der Media assets (1) zwischen den Softwareinstallationen der kontaktierbaren Hardwarekomponenten (4) automatisch abgewickelt wird.

3. Verfahren zur plattformübergreifenden Archivierung und Indizierung nach den Ansprüchen 1 und 2, **gekennzeichnet dadurch, dass** der Mediacodeinformationen insbesondere in IPTC-konformen tags abgespeichert sind.
